# EUROPÄISCHE PATENTSCHRIFT

(11) **EP 2 410 572 B1**
(45) Veröffentlichungstag und Bekanntmachung des Hinweises auf die Patenterteilung: **21.11.2012**
(21) Anmeldenummer: 10007643.9
(22) Anmeldetag: 23.07.2010
(51) Int. Cl.: H01L 31/042

(54) **Solartechnischer Kollektor**
Solar collector
Collecteur solaire

(43) Veröffentlichungstag der Anmeldung: 25.01.2012
(73) Patentinhaber: KIOTO Photovoltaics GmbH, 9300 St. Veit (AT)
(72) Erfinder: Frank, Rudolf, 9064 Pischeldorf (AT); Eusch, Ingram, 9500 Villach (AT)
(74) Vertreter: Becker, Thomas

(56) Entgegenhaltungen:
- EP-A1- 0 200 050
- DE-A1-102008 045 510
- US-B1- 7 487 771

## Beschreibung

Die Erfindung betrifft einen solartechnischen Kollektor mit einem plattenförmigen solartechnischen Modul, insbesondere einem Photovoltaik-Modul, in Rechteckform, wobei der Modul von einem Rahmen aus einem elektrisch leitfähigen Werkstoff, wie Aluminium, eingefasst ist.

Dies ist der klassische Aufbau für Photovoltaik-Module gemäß Stand der Technik. Ein typischer Rahmen besteht aus vier Rahmenteilen, die auf Gehrung geschnitten zusammengeschraubt werden. Nachteilig ist, dass sich beim Zusammengeben der Rahmenteile nicht immer eine 100 % exakte Passung ergibt. So entstehen scharfkantige Bereiche insbesondere in den vier äußeren Ecken des Rahmens, die häufig in einem weiteren Bearbeitungsschritt entgratet werden. Auch die Statik dieser Rahmens ist ungünstig.

Die DE 10 2008 045 510 A1 zeigt einen solartechnischen Kollektor mit einem Rahmen aus vier Profilschienen und vier Eckelementen, die über Verbinder mit den Profilschienen verbunden werden. Die Profilschienen weisen je eine Hohlkammer zur Aufnahme je eines Verbinders und je eine weitere Hohlkammer auf, über die Feuchtigkeit aus dem Rahmen abgeleitet werden soll. So werden Abflussbohrungen vermieden.

Für Strom führende Bauteile wie gattungsgemäße Kollektoren (Photovoltaik-Module) besteht gemäß der Europäischen Richtlinie IEC 61730 Part 2 die Forderung eines bestimmten maximalen elektrischen Widerstands. Vor diesem Hintergrund liegt der Erfindung die Aufgabe zugrunde, einen solartechnischen Kollektor der genannten Art zu optimieren, insbesondere hinsichtlich der Konfektionierung des Rahmens für den solartechnischen Modul, die Verbindung von Rahmen und Modul und/oder den elektrischen Widerstand des Bauteils.

Der Erfindung liegt die Erkenntnis zugrunde, dass eine oder mehrere der vorgenannten Teilaufgaben durch synergistisch zusammenwirkende Effekte erreicht werden können, die sich aus der Ausbildung spezieller Eckwinkel für den Rahmen ergeben.

Dazu wird ein solartechnischer Kollektor mit den Merkmalen des Anspruchs 1 vorgeschlagen.

Hinsichtlich der elektrischen Leitfähigkeit ist im Sinne einer kompakten einfachen Bauform sicherzustellen, dass der Rahmen eine durchgehende elektrische Verbindung besitzt. Insoweit sieht die Erfindung vor, (vier) Abschnitte des Rahmens (nachstehend Profilschienen genannt) über separate Eckwinkel miteinander zu verbinden, wobei die Profilschienen aus einem elektrisch leitfähigen Werkstoff bestehen und die Eckwinkel zumindest eine elektrisch leitfähige Zone aufweisen, die im Montagezustand des Rahmens, also dann, wenn die Profilschienen zu einem umlaufenden Rahmen mit den Eckwinkeln zusammengesetzt sind, eine durchgehende elektrische leitfähige Verbindung zwischen zwei, mit dem jeweiligen Eckwinkel verbundenen Profilschienen schaffen.

Grundsätzlich wird dieses Ziel bei einem rechteckigen Rahmen mit drei Eckwinkeln erreicht. Um Fehler bei der Montage zu vermeiden ist es jedoch zweckmäßig, alle (vier) Eckwinkel gleich auszubilden.

Die erfindungsgemäße Lösung schafft die Möglichkeit, einen Grundkörper der Eckwinkel aus einem elektrisch nicht leitfähigen Werkstoff, beispielsweise

Kunststoff, herzustellen, in dem oder an dem die elektrisch leitfähige(n) Zone(n) kraft- und/oder formschlüssig verläuft/verlaufen. Die elektrisch leitfähige Zone kann durch einen Metallstreifen, ein Metallnetz oder dergleichen gebildet werden. Daraus ergeben sich verschiedene Vorteile:

Der Kunststoff-Grundkörper, der insbesondere im Eckbereich des Rahmens sitzt, kann als vorgefertigtes Bauteil technisch und optisch so gestaltet werden, dass scharfkantige Bereiche entfallen. Damit entfällt auch die Notwendigkeit einer Nachbearbeitung, wie im Stand der Technik. Derartige Kunststoff-Teile können als Spritzgussteile oder im Strangguss preiswert und einfach hergestellt werden. Die konkrete Form- und Farbgebung kann sich an der Form- und Farbgebung der Profilschienen orientieren, so dass sich insgesamt das gewünschte Erscheinungsbild für den Rahmen zusammenstellen lässt.

Die elektrisch leitfähigen Bereiche der Eckwinkel können bei der Herstellung in-situ mit ausgeformt/ausgebildet werden. Sie können aber beispielsweise auch dann, wenn sie aus Metallstreifen bestehen, nachträglich in die Kunststoff-Profilteile (Eckwinkel) eingesetzt, eingeklebt, eingeklemmt oder sonstwie mit diesen befestigt werden. Dabei ist jeweils sicherzustellen, dass die elektrisch leitfähigen Bereiche an jeweils zwei benachbarte Profilschienen so anschließbar sind, dass eine durchgehende elektrische Verbindung entsteht.

Der Erdungsanschluss kann Bestandteil der elektrisch leitfähigen Zone jedes Eckwinkels sein, beispielsweise in Form einer entsprechenden Lasche.

Der Eckwinkel kann einen mittleren Abschnitt aufweisen, von dem sich zwei Zungen, im Winkel von 90° zueinander, erstrecken, die kraft- und/oder formschlüssig mit Endabschnitten korrespondierender Profilschienen verbunden werden. Der mittlere Abschnitt schließt demzufolge unmittelbar an die Endbereiche benachbarter Profilschienen an. Dieser Bereich wird deshalb auch in seiner Form- und Farbgebung an die Form- und Farbgebung der Profilschienen angepasst. Die Zungen dienen dazu, in Endabschnitten benachbarter Profilschienen eingesetzt zu werden und eine kraft- und/oder formschlüssige Verbindung zwischen Eckwinkel und Profilschiene zu schaffen. Dazu können die Zungen der Eckwinkel so ausgebildet werden, dass sie mit entsprechenden Zonen der Profilschienen verrasten oder verklemmen, mit diesen verschraubt oder verrastet werden. Vorzugsweise geschieht dies ohne Werkzeug. Beispielsweise können die Zungen Zonen aufweisen, die eine gewisse Verformbarkeit aufweisen, um hinter korrespondierenden Rastelementen der Profilschienen nach Einschieben des Eckwinkels einen Form- und Kraftschluss sicherzustellen.

Die elektrisch leitfähige Zone der Eckwinkel ist so ausgebildet, dass sie beim Aufsetzen eines Eckwinkels auf eine Profilschiene eine partielle Beschädigung der Profilschiene in einem Oberflächenbereich der Profilschiene bewirkt, die außerhalb sichtbarer Stirnflächen oder sichtbarer Wandabschnitte des Rahmens im Montagezustand liegt. Beispielsweise bestehen die Profilschienen aus eloxiertem Aluminium. Der Begriff "partielle Beschädigung der Profilschiene" ist deshalb in dem Sinne zu verstehen, dass bei der Verbindung der Eckwinkel mit der Profilschiene die Eloxalschicht aufgebrochen wird, um die gewünschte elektrische Verbindung zum elektrisch leitfähigen Abschnitt der Profilschiene zu schaffen. Dazu kann die elektrisch leitfähige Zone beispielsweise mit einem Sägezahnprofil ausgebildet sein. Die elektrisch leitfähige Zone kann aber auch mindestens einen frei über benachbarte Abschnitte vorstehenden Bereich aufweisen, der mindestens eine der folgenden Formgestaltungen aufweist: Haken, Kamm, Messer, Feder, Reibstück, Zahn, Sägezahn, Zum Beispiel ein gegen die Einsteckrichtung umgebogener metallischer Haken erfüllt zwei Effekte: beim Einschieben des Eckwinkels in die Profilschiene kratzt der Haken auf der Innenwand der Profilschiene und schabt dabei beispielsweise eine Eloxalschicht ab. Darüber hinaus dient der (elastische) Haken der kraftschlüssigen Verbindung von Eckwinkel und Profilschiene. Die genannte Formgebung des Hakens sorgt ferner dafür, dass der Eckwinkel, wenn er vollständig in die Profilschiene eingesetzt ist, nicht mehr mit der gleichen Kraft herausgezogen werden kann, mit der er hineingesteckt wurde, weil nun der Haken als Verriegelungselement wirkt. Analog gilt dies für die anderen Formgestaltungen. In allen Fällen wird kein Werkzeug benötigt.

"Sichtbare Stirnflächen" der Profilschiene sind insbesondere die Stirnflächen, die parallel zur Haupt-Oberfläche des solartechnischen Moduls verlaufen. "Sichtbare Wandabschnitte" sind die Teile des Rahmens, die von außen sichtbar senkrecht zu den genannten sichtbaren Stirnflächen die Umfangswand des Rahmens bilden.

Die Profilschienen weisen ein E-förmiges Querschnittsprofil auf Von einer Grundfläche, die einen Teil einer umfangsseitigen Wandfläche des Kollektors bildet, stehen dann drei Stege im Wesentlichen senkrecht und parallel zueinander ab, wobei zwischen einem ersten und einem zweiten Steg der solartechnische Modul gehalten wird und zwischen dem zweiten und dritten Steg Rastelemente zur kraftschlu̅ssigen Aufnahme der Eckwinkel vorhanden sind. Diese Rastelemente können mit den genannten Bereichen der elektrisch leitfähigen Zone der Eckwinkel, wie Haken etc., zusammenwirken. Die nachfolgende Figurenbeschreibung zeigt ein zugehöriges Ausführungsbeispiel.

Ein Vorteil der beschriebenen Ausführungsformen besteht darin, dass die Profilschienen endseitig im rechten Winkel zu ihrer Längserstreckung ausgebildet sein können. Die Verbindung von Rahmenabschnitten durch Gehrungsschnttte (mit den damit verbundenen Nachteilen) entfällt. Insoweit ergeben sich präzise Übergangsbereiche zwischen Profilschiene und Eckwinkel. Dies wird verstärkt, wenn die Eckwinkel in ihrem mittleren Abschnitt mit zwei Stegen ausgebildet sind, die im Montagezustand des Rahmens fluchtend zum ersten und zweite Steg der Profilschienen verlaufen. Auf diese Weise lässt sich der solartechnische Modul perfekt in den Rahmen einsetzen. Der solartechnische Kollektor kann dann im mittleren Abschnitt der Eckwinkel drei Flächenabschnitte aufweisen, die mit außenseitigen Wandabschnitten sowie sichtbaren Stirnflächen korrespondierender Profilschienen im Wesentlichen fluchten.

Die kraft- und/oder formschlüssige Verbindung von Eckwinkel und Profilschiene wird in erster Linie über die elektrisch leitfähige Zone erreicht, wie beschrieben. Die Verbindung kann aber auch zwischen dem nicht leitfähigen Teil des Eckverbinders und der Profilschiene erfolgen, beispielsweise durch Ausbildung entsprechender Hinterschnitte, korrespondierender Sägezahnprofile oder sonstige Rastmittel.

Die Auslegung der Eckwinkel und insbesondere der elektrisch leitfähigen Bereiche erfolgt nach einer Ausführungsform derart, dass der Rahmen insgesamt einen elektrischen Widerstand, gemessen nach CEI IEC 61730-2, 1. Ausgabe 2004-10, bei einem Strom von 38,5 Ampere, von < 0,1 Ohm aufweist.

Die Erfindung wird nachstehend anhand eines Ausführungsbeispieles näher erläutert. Dabei zeigen - jeweils in schematisierter Darstellung -
- Figur 1:: eine perspektivische Ansicht von innen eines Eckwinkels,
- Figur 2:: eine perspektivische Ansicht von außen des Eckwinkels nach Figur 1,
- Figur 3:: einen Querschnitt durch eine zugehörige Profilschiene,
- Figur 4:: einen Eckbereich eines solartechnischen Kollektors mit Photovoltaik-modul und Rahmen.

In den Figuren sind gleiche oder gleich wirkende Bauteile mit gleichen Bezugsziffern dargestellt.

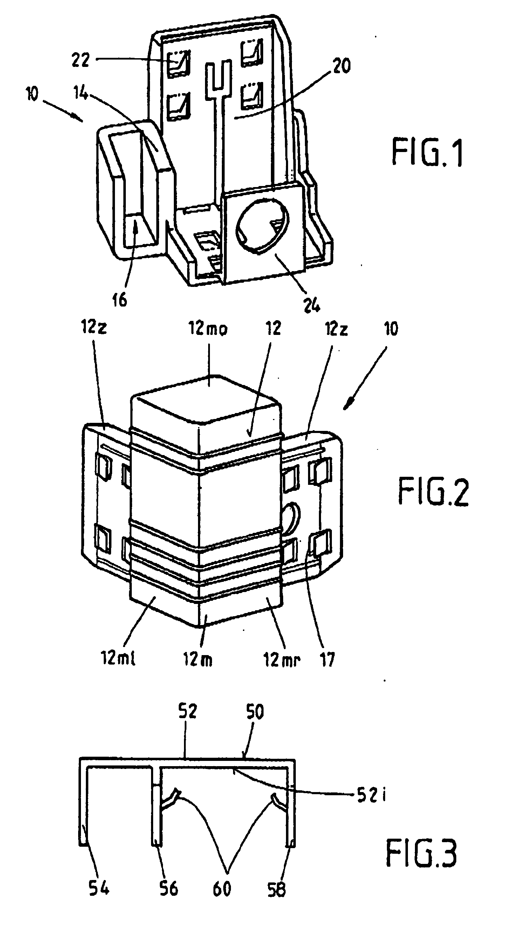

Der Eckwinkel 10 besteht aus einem Kunststoff-Grundkörper 12. Der Grundkörper 12 wird gebildet von einem mittleren Abschnitt 12m und zwei davon abstehenden Zungen 12z. Die Zungen 12z verlaufen in einem Winkel von 90° zueinander. Der mittlere Abschnitt 12m weist drei Flächenabschnitte 12ml, 12mr und 12mo auf, die Sichtflächen des Eckwinkels im montierten Zustand eines zugehörigen Rahmens bilden. Alle drei Flächen 12ml, 12mr, 12mo stehen gegenüber den benachbarten Zungen 12z vor. Figur 1 zeigt parallel zur Fläche 12mo einen Steg 14, wodurch eine winkelförmige Tasche 16 ausgebildet wird, die zur Aufnahme eines Eckbereiches eines zugehörigen Moduls 30 dient, wie nachstehend noch erläutert wird.

Die Zungen 12z weisen verschiedene Durchbrechungen auf, die jeweils mit dem Bezugszeichen 16 charakterisiert sind. Auf der Innenseite der Zungen 12z (Figur 1) ist ein Metallstreifen 20 aufgeklebt, aus dem verschiedene Taschen 22 ausgeschnitten sind, die durch die Öffnungen 16 hindurchragen und die Zungen 12z mit ihren freien Enden überragen.

Am Metallstreifen 20 ist ferner ein Erdungsanschluss 24 ausgebildet.

Ein mögliches zugehöriges Profil für eine Profilschiene 50 zeigt Figur 3. Es ergibt sich ein im Wesentlichen E-förmiges Querschnittsprofil. Von einer Grundfläche 52, die einen Teil einer umfangsseitigen Wandfläche des Kollektors bildet, stehen drei Stege 54, 56, 58 im Wesentlichen senkrecht und parallel zueinander ab, wobei zwischen dem ersten Steg 54 und dem zweiten Steg 56 der solartechnische Modul 30 gehalten wird und zwischen dem zweiten Steg 56 und dem dritten Steg 58 Rastelemente 60 zur kraftschlüssigen Aufnahme der Eckwinkel 10 vorhanden sind. Die Rastelemente 60 sind so angeordnet, dass die Zungen 12z der Eckwinkel 10 zwischen den Rastelementen 60 und der Innenseite der Grundfläche 52 kraft- und formschlüssig eingesetzt werden können, Beim Einsetzen (Einschieben) schleifen die Laschen 22 gleichzeitig auf der Innenwand 52i der Grundfläche 52, wodurch eine etwaig vorhandene Eloxalbeschichtung entfernt wird und damit eine elektrisch leitfähige Verbindung zwischen der Profilschiene 50 über die Laschen 22 und den Metallstreifen 20 zu einer benachbarten Profilschiene sichergestellt wird. Die Laschen 22 sorgen gleichzeitig für die kraftschlüssige Verbindung von Eckwinkel 10 und Profilschiene 50.

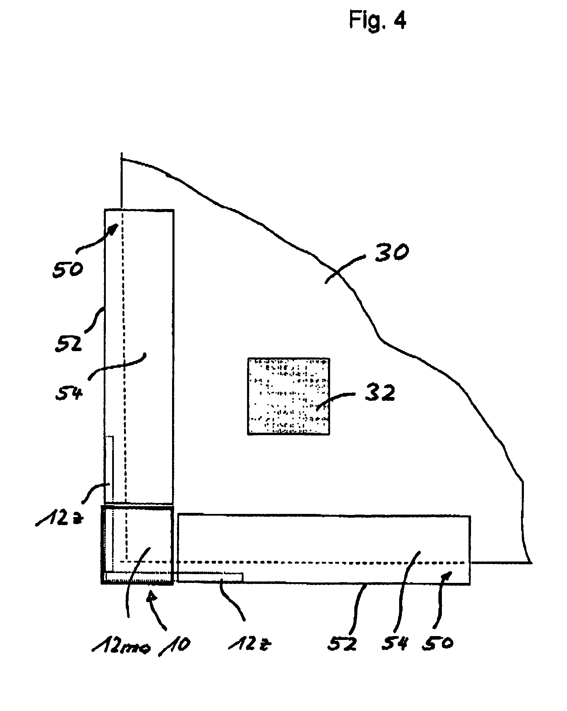

Im zusammengebauten Zustand (stark schematisierte Darstellung in Figur 4) ergibt sich dann folgendes Bild:
Im Bild unten links ist der Eckwinkel 10 zu erkennen, aus dem die beiden, im rechten Winkel zueinander verlaufenden Zungen 12z seitlich vorstehen und dabei in Profilschienen 50 ragen, wie sie in Figur 3 dargestellt sind.

Die Verrastung zwischen Eckwinkel 10 und Profilschienen 50 erfolgt auf die anhand der Figuren 1 bis 3 dargestellte Weise.

Gleiches gilt für den Erdungsanschluss 24.

Ein Photovoltaik-Modul 30, bei dem schematisch eine Zelle 32 dargestellt ist, wird im Eckbereich durch die winkelförmige Tasche 16 gehalten und randseitig im Übrigen durch den Raum, der zwischen den Stegen 54, 56 der Profilschienen 50 ausgebildet wird.

Dabei überdecken die Stege 54 den Modul 30 randseitig in dem Bereich, der frei von Photovoltaik-Zellen ist.

Die Montage erfolgt ausschließlich durch Ineinanderstecken der einzelnen Bauteile, ohne zusätzliches Werkzeug, wobei die Verrastung über die beschriebenen Rastelemente 60 der Profilschienen 50 im Zusammenwirken mit den Laschen 22 erfolgt.

## Patentansprüche

1. Solartechnischer Kollektor mit einem plattenförmigen solatechnischen Modul (30) in Rechteckform, der von einem Rahmen aus einem elektrisch leitfähigen Werkstoff eingefasst ist, wobei der Rahmen folgende Merkmale aufweist:
vier, auf korrespondierenden Randabschnitten des Moduls (30) aufsitzende Profilschienen (50) aus einem elektrisch leitfähigen Werkstoff,
jede Profilschiene (50) hat ein E-förmiges Querschnittsprofil mit einer Grundfläche (52), die einen Teil einer umfangsseitigen Wandfläche des Kollektors bildet und drei, im Wesentlichen senkrecht von der Grundfläche (52) abstehenden und parallel zueinander verlaufenden Stegen (54, 56, 58), wobei zwischen einem ersten Steg (54) und einem zweiten Steg (56) der solartechnische Modul (30) gehalten wird und zwischen dem zweiten Steg (56) und dem dritten Steg (58) Rastelemente (60) zur kraftschlüssigen Aufnahme von Eckwinkeln (10) vorhanden sind, wobei
benachbarte, im rechten Winkel zueinander verlaufende Profilschienen (50) jeweils über einen Eckwinkel (10) miteinander verbunden und
mindestens drei der Eckwinkel (10) mit jeweils mindestens einer elektrisch leitfähigen Zone (20) ausgebildet sind, die beim Aufsetzen eines Eckwinkels (10) auf eine Profilschiene (50) eine partielle Beschädigung der Profilschiene (50) in einem Oberflächenbereich der Profilschiene (50) bewirkt, der außerhalb sichtbarer Stirnflächen oder sichtbarer Wandabschnitte des Rahmens im Montagezustand liegt und im Montagezustand des Rahmens eine durchgehende elektrisch leitfähigen Verbindung zwischen zwei, mit dem jeweiligen Eckwinkel (10) verbundenen Profischienen (50) schafft und
mindestens einen Erdungsanschluss (24).

2. Solartechnischer Kollektor nach Anspruch 1 mit Eckwinkeln (10), die aus einem Kunststoff-Grundkörper bestehen, in dem oder an dem die elektrisch leitfähigen Zone(n) (20) in Form mindestens eines Metallstreifens kraft- und/oder formschlüssig verlauten.

3. Solartechnischer Kollektor nach Anspruch 1, dessen Eckwinkel (10) einen mittleren Abschnitt (12) aufweisen, von dem sich zwei Zungen (12z), im Winkel von 90 Grad zueinander, erstrecken, die kraft- und/oder formschlüssig mit Endabschnitten korrespondierender Profilschienen (50) verbunden sind.

4. Solartechnischer Kollektor nach Anspruch 3, bei dem der mittlere Abschnitt (12) der Eckwinkel (10) drei Flächenabschnitte (12ml, 12mr, 12mo) aufweist, die mit außenseitigen Wandabschnitten sowie sichtbaren Stirnflächen korrespondierender Profilschienen (50) im Wesentlichen fluchten.

5. Solartechnischer Kollektor nach Anspruch 1, bei dem die elektrisch leitfähige Zone (20) einen Abschnitt mit einem Sägezahnprofil aufweist.

6. Solartechnischer Kollektor nach Anspruch 1, bei dem die elektrisch leitfähigen Zone (20) mindestens einen frei über benachbarte Abschnitte vorstehenden Bereich (22) aufweist, der mindestens eine der folgenden Formgestaltungen aufweist: Haken, Kamm, Messer, Feder, Reibstück, Zahn, Sägezahn.

7. Solartechnischer Kollektor nach Anspruch 6, bei dem der Bereich (22) in Richtung auf eine im Montagezustand des Rahmens innenseitige Wandfläche vorsteht.

8. Solartechnischer Kollektor nach Anspruch 1, dessen Profilschienen (50) endseitig im rechten Winkel zu ihrer Längserstreckung (L-L) ausgebildet sind.

9. Solartechnischer Kollektor nach Anspruch 1, bei dem die Eckwinkel (10) in ihrem mittleren Abschnitt (12) mit zwei Stegen (12z, 14) ausgebildet sind, die im Montagezustand des Rahmens () fluchtend zum ersten und zweiten Steg (54, 56) der Profilschienen (50) verlaufen.

10. Solartechnischer Kollektor nach Anspruch 1, dessen Rahmen einen elektrischen Widerstand, gemessen nach CEI IEC 61730-2, 1. Ausgabe 2004-10, bei einem Strom von 38,5 Ampere kleiner 0,1 Ohm aufweist.

## Claims

1. Solar collector with a board shaped solar technical module (30) in a rectangular shape, which is enclosed by a frame out of an electro-conductive material, wherein the frame features the following characteristics:
four profile-rails (50), resting on corresponding edge areas of the module (30), made out of an electrically conductive material,
each profile-rail (50) has an E-shaped cross-sectional shape with a base area (52), which forms a part of the circumferential wall area of the collector, and three , generally perpendicularly from the base area (52) protruding bars (54, 56, 58) which generally run parallel to each other, whereby a solar module is held between the first bar (54) and the second bar (56) and whereby latch elements (60) for a force-fitted holding of the corner brackets (10) are present between the second bar (56) and the third bar (58), wherein
adjacent profile-rails (50), extending at a right angle to each other are connected with each other via a corner bracket (10) and
at least three of the corner brackets (10) feature at least one electrically conductive zone (20), which achieves a partial damaging of the profile-rail (50) on a surface area, which is located outside visible face surfaces or visible wall segments of the frame in the mounted position when the corner bracket (10) is attached to the profile-rail (50) and which, in the mounted position of the frame, creates a continuous electrically conductive connection between two profile rails (50) connected by corresponding corner brackets (10) and
at least one earthing connection (24).

2. Solar collector according to claim 1 with corner brackets (10), which consist of a plastic base body, in or on which the electrically conductive zone(s) (20) extend force- and/or form-fitted in the form of a metal strip.

3. Solar collector according to claim 1, whose corner brackets (10) feature a middle segment (12) from which two tongues (12z) are extending, at an angle of 90° to each other, which are connected force- and/or form-fitted with the end segments of the corresponding profile-rails (50).

4. Solar collector according to claim 3, wherein the middle segment (12) of the corner brackets (10) features three area segments (12ml, 12mr, 12mo), which generally align with the outer wall segments and the visible face surfaces of the corresponding profile-rails (50).

5. Solar collector according to claim 1, wherein the electrically conductive zone (20) features a segment with a sawtooth profile.

6. Solar collector according to claim 1, wherein the electrically conductive zone (20) features at least one area (22) which is freely protruding over adjacent segments, which features at least one of the following designs: hook, comb, knife, spring, friction piece, tooth, sawtooth.

7. Solar collector according to claim 6, wherein the area (22) protrudes into a direction of an, inside wall area, in the mounted position.

8. Solar collector according to claim 1, whose profile-rails (50) are designed at their ends at a right angle with respect to their longitudinal extension.

9. Solar collector according to claim 1, wherein the corner brackets (10) feature two bars (12z, 14) in their middle segments (12) which run aligned with the first and second bar (54, 56) of the profile-rails (50) in the installed condition of the frame.

10. Solar collector according to claim 1, whose frame features an overall electrical resistance, measured according to CEI IEC 61730-2, 1. edition 2004-10, at a current of 38.5 ampere, of < 0.1 Ohm.

## Revendications

1. Collecteur solaire comportant un module solaire (30) en forme de plaque de forme rectangulaire, qui est encastré dans un châssis en matériau électriquement conducteur, dans lequel le châssis présente les caractéristiques suivantes :
quatre rails profilés (50) en matériau électriquement conducteur reposant sur des portions de bord du module (30),
chaque rail profilé (50) a un profil de section transversale en forme de E avec une surface de fond (52), qui forme une partie d'une surface de paroi circonférentielle du collecteur et trois gradins (54, 56, 58) dépassant essentiellement à la verticale de la surface de fond (52) et s'étendant parallèlement les uns aux autres, dans lequel le module solaire (30) est maintenu entre un premier gradin (54) et un deuxième gradin (56) et des éléments d'encliquetage (60) pour la réception par conjonction de force d'angles de coin (10) sont présents entre le deuxième gradin (56) et le troisième gradin (58), dans lequel
des rails profilés (50) voisins, s'étendant à angle droit les uns par rapport aux autres sont respectivement reliés les uns aux autres par l'intermédiaire d'un angle de coin (10) et
au moins trois des angles de coin (10) sont conçus avec respectivement au moins une zone électriquement conductrice (20), qui lors de la pose d'un angle de coin (10) sur un rail profilé (50) provoque une détérioration partielle du rails profilé (50) dans une zone de surface du rail profilé (50), qui se situe à l'extérieur des surfaces frontales visibles ou des portions de paroi visibles du châssis en l'état monté et en l'état monté du châssis une liaison électriquement conductrice continue entre deux rails profilés (50) reliés par l'angle de coin respectif (10) est créée, et
au moins un branchement de mise à la terre (24).

2. Collecteur solaire selon la revendication 1 comportant des angles de coin (10), qui sont constitués d'un corps de base en plastique, dans lequel ou sur lequel la(les) zone(s) électriquement conductrices (20) s'étendent sous la forme d'au moins une bande métallique par conjonction de force et/ou de forme.

3. Collecteur solaire selon la revendication 1, dont les angles de coin (10) présentent une portion centrale (12), dont deux languettes (12z) s'étendent à un angle de 90 degrés l'une par rapport à l'autre, qui sont reliées par conjonction de force et/ou de forme à des portions d'extrémité de rails profilés (50) correspondants.

4. Collecteur solaire selon la revendication 3, dans lequel la portion centrale (12) des angles de coin (10) présente trois portions de surface (12ml, 12mr, 12mo), qui s'alignent essentiellement avec les portions de paroi extérieures ainsi que les surfaces frontales visibles de rails profilés (50) correspondants.

5. Collecteur solaire selon la revendication 1, dans lequel la zone électriquement conductrice (20) présente une portion avec un profil en dent de scie.

6. Collecteur solaire selon la revendication 1, dans lequel la zone électriquement conductrice (20) présente au moins une zone (22) saillant au-dessus de portions voisines, qui présentent au moins une des configurations suivantes : crochet, peigne, lame, ressort, pièce de friction, dent, dent de scie.

7. Collecteur solaire selon la revendication 6, dans lequel la zone (22) saille dans la direction d'une surface de paroi intérieure en l'état monté du châssis.

8. Collecteur solaire selon la revendication 1, dont les rails profilés (50) sont réalisés aux extrémités à angle droit par rapport à leur extension longitudinale (L-L).

9. Collecteur solaire selon la revendication 1, dans lequel les angles de coin (10) dans leur portion centrale (12) sont conçus avec deux gradins (12z, 14), qui en l'état monté du châssis s'étendent en alignement par rapport au premier et au deuxième gradin (54, 56) des rails profilés (50).

10. Collecteur solaire selon la revendication 1, dont le châssis présente une résistance électrique, mesurée selon CEI IEC 61730-2, 1^{ére} édition 2004-10, en présence d'un courant de 38,5 ampères inférieur à 0,1 ohm.
